Europäisches Patentamt

European Patent Office

Office européen des brevets

(11) Numéro de publication: **0 309 347**
**A1**

(19)

## (12) DEMANDE DE BREVET EUROPEEN

(21) Numéro de dépôt: 88402382.1

(22) Date de dépôt: 21.09.88

(51) Int. Cl.⁴: **H 04 N 7/167**

(30) Priorité: 24.09.87 FR 8713226

(43) Date de publication de la demande:
29.03.89 Bulletin 89/13

(84) Etats contractants désignés:
BE DE ES GB IT LU NL

(71) Demandeur: APPLICATIONS ELECTRONIQUES
TECHNIQUES AVANCEES "A.E.T.A."
62 à 70, rue Blanchard
F-92363 Fontenay aux Roses (FR)

(72) Inventeur: Ferrero, Paul
125, avenue du Général Leclerc
F-78220 Viroflay (FR)

Kirche, Roger
Marolles par Gas
F-28320 Gallardon (FR)

Toret, Alain
26, Rue de Paris
F-78230 Le Pecq (FR)

(74) Mandataire: Plaçais, Jean-Yves et al
Cabinet Netter 40, rue Vignon
F-75009 Paris (FR)

(54) Procédé et dispositif de cryptage/décryptage analogique d'un signal vidéo analogique.

(57) Le procédé de cryptage/décryptage analogique selon l'invention s'applique à un signal vidéo analogique (S) comportant un signal utile (SU) relatif aux lignes de l'image, entrecoupé d'intervalles de retour-ligne (IRL). On fait subir à des parties disjointes du signal utile (SU) une inversion en fonction d'une suite d'informations binaires choisie, possédant une allure sensiblement aléatoire, et l'on obtient un signal vidéo inversé (SI). On peut également ajouter à ce signal (SI) un signal perturbateur (SP) tiré d'au moins une forme d'onde, choisie, quasi-aléatoire. Afin que le signal de sortie soit dans un gabarit normalisé, on peut effectuer une compression du signal vidéo et l'on obtient alors finalement un signal crypté (SCR). Le procédé de décryptage consiste à effectuer des opérations inverses du cryptage.

FIG.6

Bundesdruckerei Berlin

EP 0 309 347 A1

## Description

### Procédé et dispositif de cryptage/décryptage analogique d'un signal vidéo analogique.

L'invention concerne un procédé et un dispositif de cryptage/décryptage analogique d'un signal vidéo analogique, comportant un signal utile relatif aux lignes de l'image, entrecoupé d'intervalles de retour-ligne.

Au sens de la présente invention, les mots "cryptage" et "décryptage" visent respectivement le codage et le décodage d'informations par des personnes autorisées.

Le terme "analogique" relatif au cryptage/décryptage signifie que le signal vidéo analogique à crypter ou à décrypter reste un signal analogique quels que soient les traitements de cryptage ou de décryptage qu'il subit. Dans la suite du texte, même si cela n'est pas mentionné explicitement, le cryptage/décryptage doit être considéré comme analogique.

On ne connaît pas actuellement de procédé de cryptage analogique permettant d'obtenir de façon simple un signal vidéo crypté qui soit, d'une part, incompréhensible sur l'instant par une personne ne possédant pas le procédé de décryptage associé, et qui soit, d'autre part, extrêmement difficile à analyser dans le but de découvrir ce procédé de décryptage par des auto-corrélations.

Un but de l'invention est de proposer un procédé et dispositif de cryptage/décryptage de cette sorte.

Un autre but de l'invention est de proposer un dispositif détruisant lui-même la clé de cryptage et de décryptage en cas de tentative de piratage.

L'invention a donc pour objet un procédé de cryptage/décryptage analogique d'un signal vidéo analogique, comportant un signal utile relatif aux lignes de l'image, entrecoupé d'intervalles de retour-ligne, caractérisé par le fait que l'on fait subir à des parties disjointes du signal utile une inversion en fonction d'une suite d'informations binaires, choisie, possédant une allure sensiblement aléatoire.

Dans un mode préféré de réalisation, lesdites parties disjointes sont relatives à des lignes successives.

Avantageusement, la suite d'informations binaires comprend au moins un mot pseudo-aléatoire choisi et de préférence une succession choisie, prédéterminée, de mots pseudo-aléatoires.

Selon un aspect de l'invention, on génère les mots pseudo-aléatoires à une fréquence prédéterminée, notamment la fréquence ligne, un mot pseudo-aléatoire de la succession étant différent du précédent.

Selon un autre aspect de l'invention, on ajoute en outre, algébriquement, au signal utile, un signal perturbateur tiré d'au moins une forme d'onde, choisi, quasi-aléatoire.

Avantageusement, on engendre ladite forme d'onde à partir d'au moins un mot pseudo-aléatoire, de préférence à partir de plusieurs mots pseudo-aléatoires.

On peut charger périodiquement ledit (lesdits) mot(s) dans un générateur pseudo-aléatoire cadencé par une horloge synchro ne de la fréquence ligne.

Dans un mode préféré de réalisation, le (les) mot(s) pseudo-aléatoire(s) est (sont) commun(s).

L'invention a également pour objet un dispositif de cryptage/décryptage analogique destiné à traiter un signal vidéo analogique, comportant un signal utile relatif aux lignes de l'image, entrecoupé d'intervalles de retour-ligne, ledit dispositif comprenant un étage d'entrée, un étage de sortie et des moyens de traitement entre ces deux étages, caractérisé en ce que les moyens de traitement comprennent un étage d'inversion capable d'inverser algébriquement des parties disjointes du signal utile d'entrée et des moyens de commande d'inversion commandant l'étage d'inversion.

Avantageusement, les moyens de commande d'inversion comprennent un générateur générant une suite d'informations binaires, choisie, possédant une allure sensiblement aléatoire.

Dans un mode préféré de réalisation, ledit générateur comprend une mémoire reprogrammable dans laquelle est préprogrammée une suite rangée de mots binaires.

Selon un aspect de l'invention, chaque décision d'inversion est prise en fonction d'une condition logique prédéterminée appliquée à l'un des mots binaires.

Avantageusement, les moyens de traitement comprennent, en outre, des moyens pour produire un signal perturbateur tiré d'au moins une forme d'onde, choisi, quasi-aléatoire, et un étage d'incrustation/désincrustation pour ajouter algébriquement ce signal perturbateur aux parties disjointes du signal utile.

Avantageusement, les moyens pour produire le signal perturbateur comprennent un générateur pseudo-aléatoire capable d'engendrer une séquence pseudo-aléatoire, choisie, en réponse au chargement dans ce générateur d'un mot pré-établi et une mémoire reprogrammable pour stocker au moins un tel mot.

Dans un mode de réalisation préféré de l'invention, la mémoire reprogrammable est commune aux moyens de commande d'inversion et aux moyens pour produire le signal perturbateur.

Selon un autre aspect de l'invention, le dispositif destiné au cryptage comprend en outre un étage de compression du signal utile.

Dans ce dispositif, destiné au cryptage, la décision de cryptage d'une partie de signal utile est avantageusement prise en fonction d'un signal d'autorisation agissant sur une commande de la chaîne de cryptage.

Selon un aspect de l'invention, le dispositif destiné au décryptage, comprend un étage d'expansion du signal vidéo.

Avantageusement, le dispositif selon l'invention est logé dans un boîtier muni de connecteurs propres à l'insertion dans une ligne de transmission vidéo, en particulier coaxiale, et équipé d'un logement de mémoire enfichable contenant ledit mot.

Selon un aspect préféré de l'invention, lesdites parties disjointes sont relatives à des lignes successives.

D'autres avantages et caractéristiques de l'invention apparaîtront à l'examen de la description détaillée ci-après et des dessins annexés sur lesquels :

- la figure 1 est un synoptique schématique des principaux constituants d'un mode de réalisation d'un dispositif selon l'invention destiné au cryptage,
- la figure 2 est un schéma plus détaillé d'un des constituants du synoptique de la figure 1,
- la figure 3 est une vue en perspective schématique d'un boîtier concernant le dispositif de la figure 1,
- la figure 4 est un synoptique schématique des principaux constituants d'un mode de réalisation d'un dispositif selon l'invention destiné au décryptage,
- la figure 5 est un schéma plus détaillé d'un des constituants du synoptique de la figure 4, et,
- la figure 6 est un ensemble de cinq diagrammes représentant un signal vidéo analogique au cours des différentes étapes d'un procédé de cryptage selon l'invention.

Dans la mesure où ils comportent de nombreux éléments de caractère certain, les dessins annexés font partie intégrante de la description, non seulement pour permettre de mieux faire comprendre celle-ci, mais aussi pour contribuer à la définition de l'invention le cas échéant.

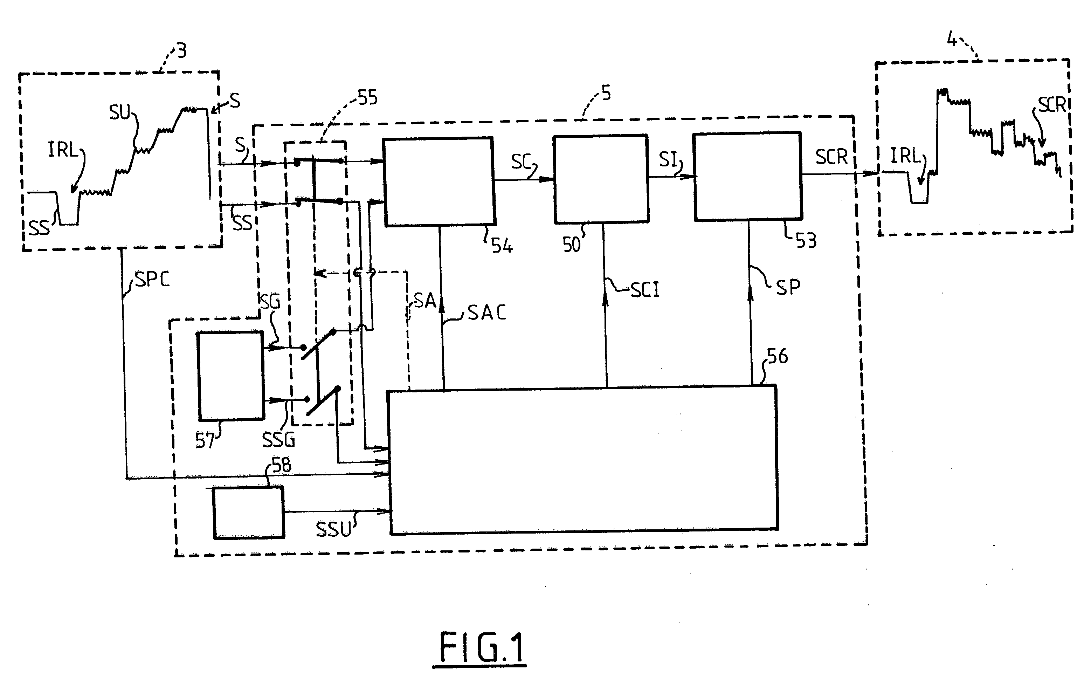

Le dispositif de cryptage selon l'invention, tel que représenté sur la figure 1, est destiné à crypter un signal vidéo analogique S classique qui se traite par ligne. Ce signal S peut provenir par exemple d'une caméra vidéo, et comporte un signal utile SU relatif aux lignes de l'image, entrecoupé d'intervalles de retour-ligne IRL. Ces intervalles de retour-ligne comportent des signaux de synchronisation SS et peuvent comporter également des parties du signal de chrominance si l'on est en couleur.

Comme il sera expliqué plus en détail ci-après, seul le signal utile SU subit un cryptage/décryptage. De plus, bien que l'invention puisse s'appliquer à des parties disjointes quelconques du signal utile, on admettra maintenant que les parties disjointes du signal utile sont relatives à des lignes successives de l'image. Ainsi, sur la figure 1 est représentée une ligne complète de l'image avec son signal utile SU et son intervalle de retour-ligne IRL.

Ce dispositif de cryptage comprend un étage d'entrée 3, jouant un rôle d'interface avec la caméra vidéo, un étage de sortie 4 propre à rendre compatible le signal crypté SCR avec les normes d'une ligne de transmission, par exemple, coaxiale, et enfin des moyens de traitement 5, placés entre les deux dits étages 3 et 4 et destinés à effectuer un cryptage du signal S. Dans un but de clarté, une représentation graphique du signal S est figurée dans l'étage d'entrée 3 et une représentation graphique du signal crypté SCR est figurée dans l'étage de sortie 4.

Les moyens de traitement 5 comprennent un étage d'inversion vidéo 50, actionné par un signal de commande d'inversion SCI, et propre à effectuer une inversion du signal utile SU, comme il sera explicité ci-après, et à délivrer un signal analogique inversé SI.

Au sens de la présente invention, l'inversion vidéo consiste à inverser dynamiquement le signal de telle sorte que les valeurs minimales avant inversion deviennent maximales après inversion et réciproquement, et les valeurs intermédiaires avant inversion prennent après cryptage des valeurs symétriques par rapport à la valeur moyenne.

Les moyens de traitement 5 comprennent également un étage d'incrustation vidéo 53 propre à ajouter au signal inversé SI un signal perturbateur SP pour obtenir le signal crypté SCR. Afin que ce signal SCR reste dans un gabarit donné, compatible avec les normes de transmission, les moyens de traitement 5 comprennent également un étage de compression vidéo 54, actionné par un signal d'autorisation de compression SAC, et destiné à comprimer dynamiquement le signal S issu de l'étage d'entrée 3 pour délivrer un signal comprimé SC.

Les trois étages précités, 50, 53, 54, sont commandés par une unité de traitement 56. Cette unité de traitement délivre, outre le signal perturbateur SP et les signaux SAC et SCI, un signal d'autorisation de cryptage SA, agissant sur une commande 55. Cette commande 55 permet d'envoyer sur l'étage de compression, soit le signal analogique S, soit une mire fixe SG issue d'un générateur de mires 57. Bien entendu, dans le cas où la mire SG est sélectionnée, les trois étages 54, 50 et 53 sont inactifs et la mire SG est transmise telle quelle, via l'étage de sortie 4 sur la ligne de transmission. Ce signal d'autorisation de cryptage SA est fonction d'un certain nombre de paramètres qui seront explicités ci-après.

La commande 55 permet de sélectionner, en même temps que les signaux S ou SG, les signaux de synchronisation associés SS et SSG, et de les envoyer vers l'unité de traitement 56. Cette dernière reçoit également, d'une part, de l'étage d'entrée 3 un signal de présence caméra SPC signalant, comme son nom l'indique, la présence effective d'une caméra, et d'autre part, des signaux de surveillance SSU en provenance d'un organe de protection du dispositif 58. Cet organe de protection comprend des détections de perte d'alimentation ainsi que d'autres détecteurs qui seront explicités ci-après.

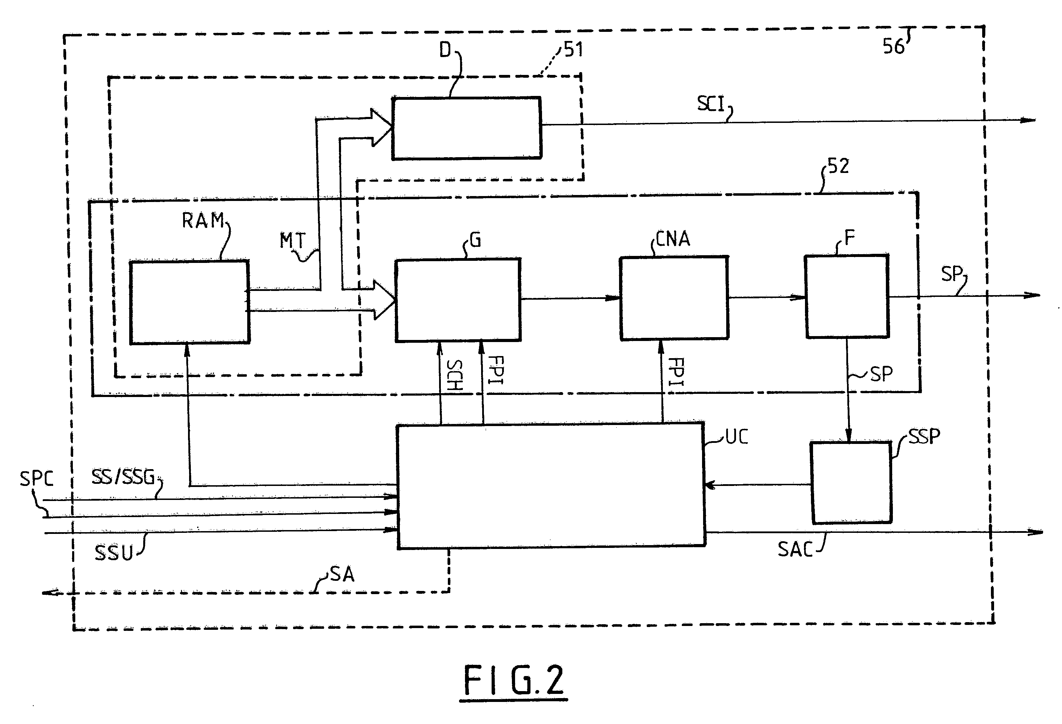

Si l'on se réfère maintenant plus particulièrement à la figure 2, on voit que l'unité de traitement 56 comprend, en premier lieu, une unité centrale UC, en deuxième lieu, des moyens de commande d'inversion 51, en troisième lieu, des moyens 52 pour produire le signal perturbateur SP.

Les différents éléments constitutifs de l'unité de traitement 56 sont organisés pour crypter le signal S de façon pseudo-aléatoire comme explicité en détail ci-après.

Parmi ces éléments constitutifs, les moyens de commande d'inversion 51 comprennent une mémoire vive RAM dans laquelle est préprogrammée une suite rangée de mots binaires MT, chaque mot binaire étant différent du précédent. Ces mots binaires MT sont chargés dans la mémoire RAM à partir d'une mémoire reprogrammable amovible non représentée sur cette figure 2. Cette mémoire reprogrammable, et plus particulièrement la mémoire vive RAM, fait office de générateur générant une suite d'informations binaires, en l'occurence des mots, choisie, possédant une allure sensiblement aléatoire. La mémoire vive RAM est activée par l'unité centrale UC à la fréquence ligne, c'est-à-dire toutes les 64 microsecondes.

Chaque mot binaire MT est envoyé dans un organe de décision D, qui effectue un traitement sur les bits du mot MT afin de délivrer le signal binaire SCI commandant ou non l'étage d'inversion 50. Ce traitement peut être par exemple, la parité de la somme de tous les bits du mot MT, ou bien encore, une comparaison de valeur entre un mot binaire MT et son prédécesseur. D'une façon générale, la décision d'inversion est prise en fonction d'une condition logique prédéterminée appliquée au mot MT.

Les moyens 52 pour produire le signal perturbateur SP comprennent, en premier lieu, la mémoire vive RAM qui délivre le mot MT, en deuxième lieu, un générateur pseudo-aléatoire G capable d'engendrer une séquence pseudo-aléatoire, choisie, en réponse au chargement dans ce générateur G du mot MT, en troisième lieu, un convertisseur numérique-analogique CNA convertissant la séquence pseudo-aléatoire en un signal perturbateur analogique pseudo-aléatoire, en quatrième lieu un filtre F dont la sortie fournit le signal perturbateur SP présentant un caractère pseudo-aléatoire. On associe à ces moyens 52 un étage de surveillance SSP du signal perturbateur SP rebouclé sur l'unité centrale UC.

Le générateur pseudo-aléatoire G est réalisé par un circuit programmable de portes logiques et est piloté par l'unité centrale UC à une fréquence de pilotage FPI multiple de la fréquence ligne du signal S. Le convertisseur CNA est également synchronisé à la même fréquence FPI. Le mot MT issu de la mémoire vive RAM est chargé dans le générateur G en fonction d'un signal de chargement SCH envoyé par l'unité centrale à une fréquence prédéterminée qui est en l'occurence la fréquence ligne. Les divers signaux de chargement et fréquence de pilotage sont issus des signaux de synchronisation SS du signal reçus par l'unité de calcul. Cette unité centrale est donc synchronisée sur les intervalles de retour-ligne.

Les moyens 52 produisent donc un signal perturbateur SP sous la forme de créneaux dont chacun a une durée pseudo-aléatoire et une amplitude choisie entre N valeurs. Bien entendu, tout signal tiré d'au moins une forme d'onde quasi-aléatoire convient.

Le logiciel présent dans l'unité centrale est surveillé de façon classique par un chien de garde qui peut forcer le dispositif sur la position mire. Ce logiciel prend également en compte un signal provenant de l'étage de surveillance S et permet de détecter une panne éventuelle de la chaîne de génération de cryptage.

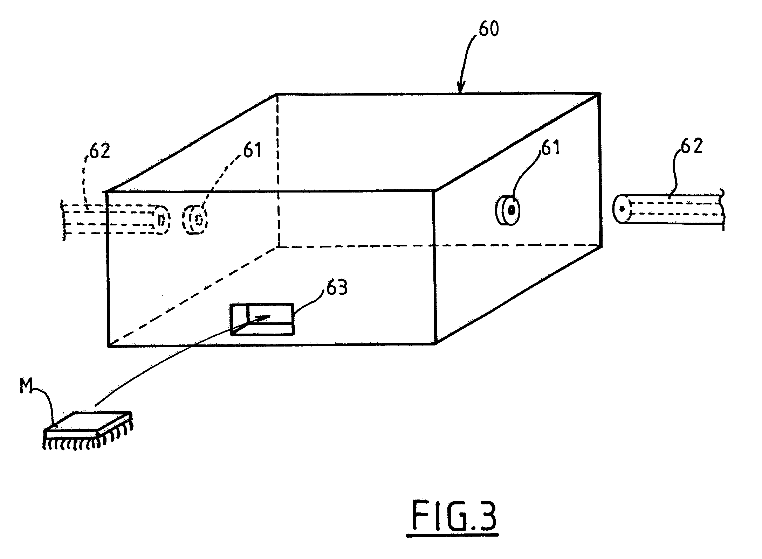

Le dispositif de cryptage décrit ci-avant est logé dans un boîtier 60 tel que représenté schématiquement sur la figure 3. Ce boîtier 60 est muni de deux connecteurs 61 propres à l'insertion dans une ligne de transmission vidéo 62, par exemple coaxiale. Ce boîtier est équipé d'un logement 63 permettant l'enfichage par l'utilisateur de la mémoire reprogrammable M contenant les mots binaires MT avant leur chargement dans la mémoire vive RAM par l'unité centrale UC. Lorsque le boîtier 60 n'est pas équipé de la mémoire reprogrammable M, seul le programme de chargement est présent dans l'unité centrale UC. L'organe de protection du dispositif 58 comprend également des détecteurs de tentatives d'ouverture du boîtier 60.

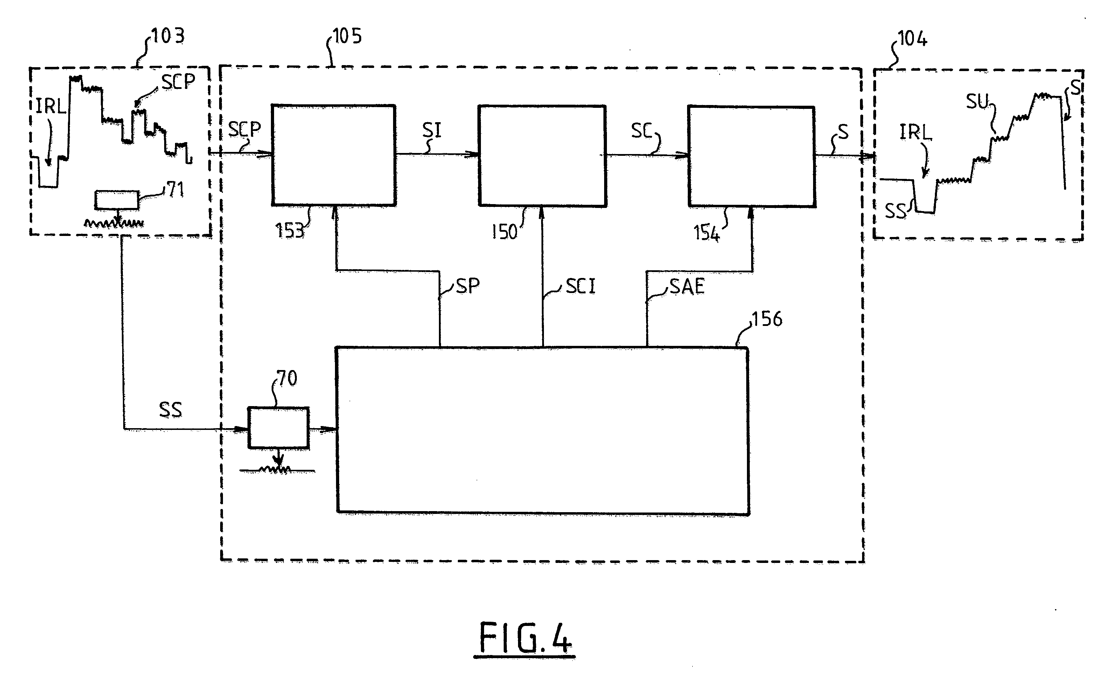

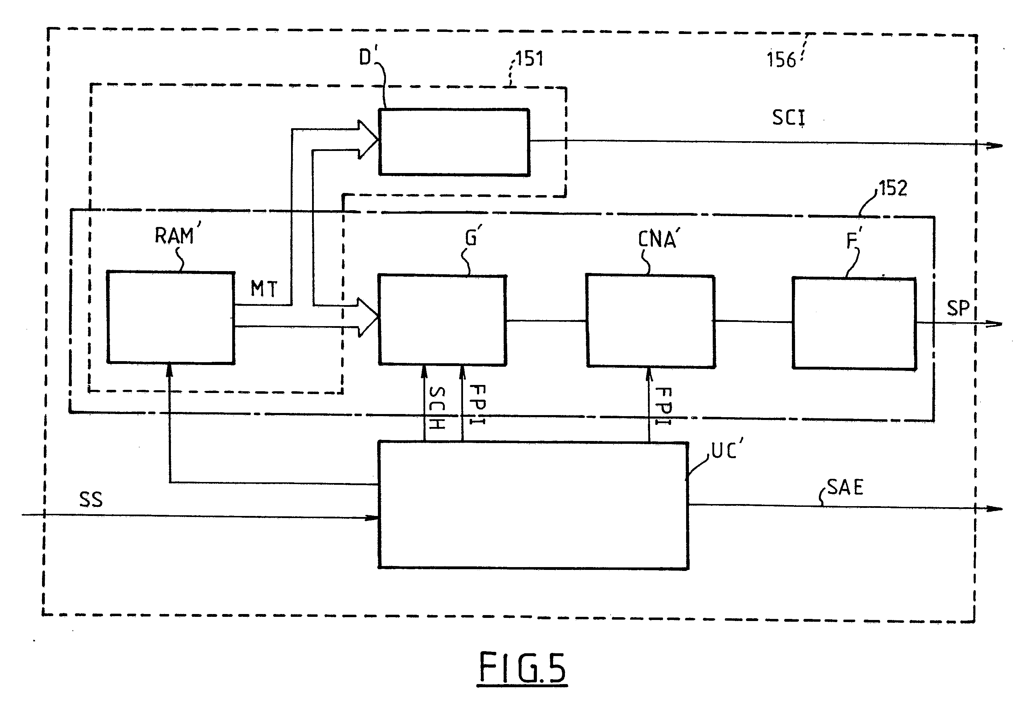

Le dispositif de décryptage, associé au dispositif de cryptage décrit ci-avant, est représenté sur les figures 4 et 5. Ce dispositif de décryptage effectue des opérations inverses de celui de cryptage et comprend donc des éléments ayant des fonctions analogues ou complémentaires à ceux du dispositif de cryptage. D'une façon générale, ces éléments ont leurs références augmentées de 100, lorsqu'elles sont numériques, ou additionnées d'un ' lorsqu'elles sont alphabétiques, par rapport à celles du dispositif de cryptage.

Ainsi les moyens de traitement 105 comprennent un étage d'expansion vidéo 154, un étage d'inversion vidéo 150 et un étage de désincrustation vidéo 153. Ces trois étages sont commandés par une unité de traitement 156 qui délivre un signal d'autorisation d'expansion SAE, un signal de commande d'inversion SCI et le signal perturbateur SP. Les moyens de traitement 105 comprennent également un étage de réglage de phase 70 permettant de régler la phase entre le signal de synchronisation SS et le signal utile crypté. De même, l'étage d'entrée 103 comprend un système de réglage 71 du niveau vidéo.

D'une façon analogue à la figure 1, et pour plus de clarté, une représentation graphique du signal crypté reçu SCR est figurée dans l'étage d'entrée 103 et une représentation graphique du signal reconstitué S est figurée dans l'étage de sortie 104.

L'unité de traitement 156 est quasiment identique à celle 56 du dispositif de cryptage et ne comprend pas d'étage de surveillance de mesure du signal perturbateur. Le dispositif de décryptage est logé, enfin, dans un boîtier analogue au boîtier 60 ci-avant décrit.

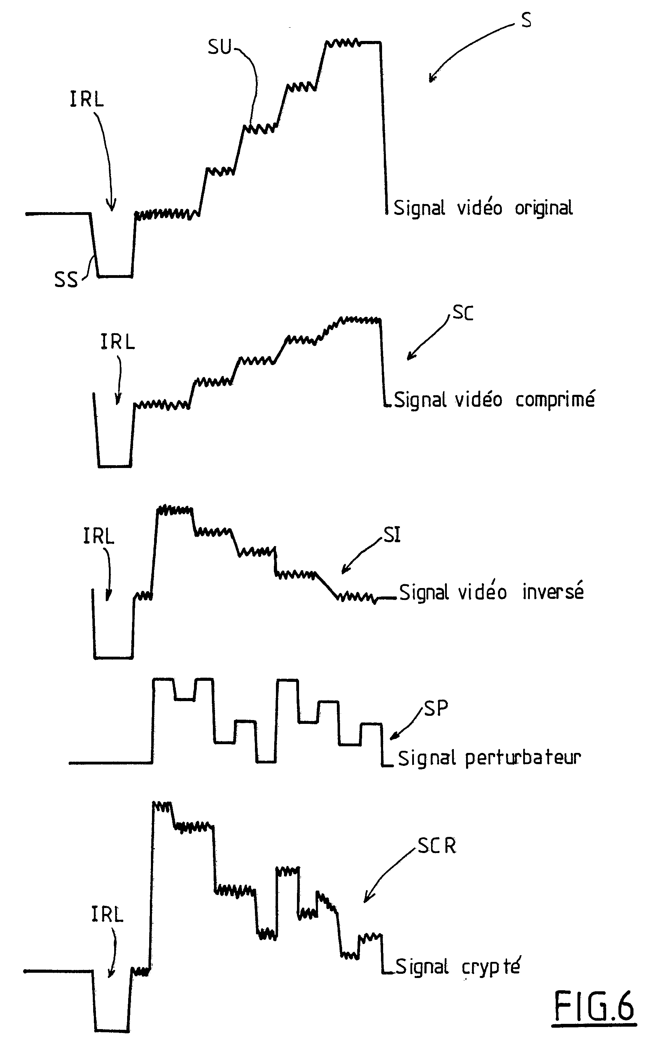

Le fonctionnement de ce dispositif de cryptage/décryptage va maintenant être décrit en s'appuyant plus particulièrement sur la figure 6 qui montre les différentes étapes du procédé de cryptage selon l'invention. Ce fonctionnement est décrit pour une ligne de l'image et est bien sûr analogue pour toutes les lignes.

L'utilisateur désirant envoyer un signal crypté enfiche la mémoire reprogrammable M dans le logement prévu sur le boîtier 60 et tape son code confidentiel à l'aide d'un clavier prévu sur le boîtier et non représenté sur les figures. Cette action déclenche le chargement de la suite de mots binaires contenus dans la mémoire reprogrammable vers la mémoire vive RAM. A l'autre extrémité de la ligne l'utilisateur désirant décrypter le signal vidéo effectue les mêmes opérations et charge également dans la mémoire vive de l'unité de traitement 156 du boîtier de décryptage les mêmes mots binaires contenus dans une mémoire reprogrammable rigoureusement identique à celle utilisée pour le cryptage.

Lorsque le signal vidéo S arrive sur l'étage d'entrée 3, les signaux de synchronisation SS sont envoyés sur l'unité centrale UC qui les exploite pour délivrer toutes les 64 microsecondes un mot binaire de la suite pseudo-aléatoire. Ce mot agit sur l'organe de décision D et le générateur pseudo-aléatoire et, en fonction des différents traitements, commande ou non l'inversion du signal utile de la ligne pour délivrer un signal inversé SI et ajoute un signal perturbateur SP. Comme il a été expliqué ci-avant, le signal est préalablement comprimé, SC, pour ne pas dépasser le gabarit donné.

Toutes les 64 microsecondes le mot binaire envoyé est différent du précédent. Ainsi, le cycle de génération des mots pseudo-aléatoires est également lui-même pseudo-aléatoire. Ceci permet d'éviter ou du moins de retarder le décryptage du signal par un tiers par des mesures d'auto-corrélation.

Pendant toute la période de cryptage un signal de présence caméra est envoyé à l'unité centrale UC. Le signal perturbateur est surveillé et l'organe de protection 58 surveille une perte d'alimentation ou une tentative d'ouverture ou d'effraction du boîtier. Si, pour une raison quelconque, un de ces signaux de surveillance était relatif à un mauvais fonctionnement ou à une alarme du système, le programme de mots binaires contenu dans la mémoire vive RAM serait automatiquement effacé, si bien que la personne ayant tenté une effraction serait incapable de découvrir la clé de décryptage.

A l'autre bout de la ligne le signal crypté est décrypté suivant les mêmes opérations. Les signaux de synchronisation sont récupérés par l'unité de traitement 156 afin qu'elle soit synchrone avec l'unité de traitement 56, les mêmes commandes d'inversion sont effectuées et le même signal perturbateur SP est cette fois-ci retranché pour retrouver le signal original.

L'invention peut admettre des variantes, notamment les suivantes :

- l'étage de compression/expansion vidéo n'est pas nécessaire si l'on est certain de ne pas dépasser le gabarit donné,

- la fréquence de délivrance des mots binaires peut varier de façon pseudo-aléatoire au cours du procédé.

## Revendications

1. Procédé de cryptage/décryptage analogique d'un signal vidéo analogique (S), comportant un signal utile (SU) relatif aux lignes de l'image, entrecoupé d'intervalles de retour-ligne (IRL), caractérisé par le fait que l'on fait subir à des parties disjointes du signal utile (SU) une inversion en fonction d'une suite d'informations binaires, choisie, possédant une allure sensiblement aléatoire.

2. Procédé selon la revendication 1, caractérisé par le fait que lesdites parties disjointes sont relatives à des lignes successives.

3. Procédé selon l'une des revendications 1 et 2, caractérisé par le fait que la suite d'informations binaires comprend au moins un mot pseudo-aléatoire (MT) choisi.

4. Procédé selon l'une des revendications 1 à 3' caractérisé par le fait que la suite d'informations binaires comprend une succession prédéterminée de mots pseudo-aléatoires (MT) choisie.

5. Procédé selon la revendication 4, caractérisé par le fait qu'on génère les mots pseudo-aléatoires à une fréquence prédéterminée, un mot pseudo-aléatoire (MT) de la succession étant différent du précédent.

6. Procédé selon les revendications 2 et 5 prises en combinaison, caractérisé par le fait que ladite fréquence prédéterminée est la fréquence ligne.

7. Procédé selon l'une des revendications 1 à 6, caractérisé en outre par le fait qu'on ajoute algébriquement au signal utile (SU) un signal perturbateur (SP) tiré au moins d'une forme d'onde, choisi, quasi-aléatoire.

8. Procédé selon la revendication 7, caractérisé par le fait qu'on engendre ladite forme d'onde à partir d'au moins un mot pseudo-aléatoire (MT).

9. Procédé selon la revendication 8, caractérisé par le fait qu'on engendre ladite forme d'onde à partir de plusieurs mots pseudo-aléatoires (MT).

10. Procédé selon l'une des revendications 8 et 9, caractérisé par le fait qu'on charge périodiquement ledit (lesdits) mot(s) (MT) dans un générateur pseudo-aléatoire (G;G') cadencé par une horloge synchrone de la fréquence ligne.

11. Procédé selon l'une des revendications 8 à 10 prises en combinaison avec l'une des revendications 3 et 4, caractérisé par le fait que le (les) mot(s) pseudo-aléatoire(s) (MT) est (sont) commun(s).

12. Dispositif de cryptage/décryptage analogique destiné à traiter un signal vidéo analogique (S), comportant un signal utile (SU) relatif aux lignes de l'image, entrecoupé d'intervalles de retour-ligne (IRL), ledit dispositif comprenant un étage d'entrée (3;103), un étage de sortie (4;104) et des moyens de traitement (5;105) entre ces deux étages, caractérisé en ce que les moyens de traitement (5;105) comprennent un étage d'inversion (50;150) capable d'inverser algébriquement des parties disjointes du signal utile d'entrée (SU) et des moyens de commande d'inversion (51;151) commandant l'étage d'inversion (50;150).

13. Dispositif selon la revendication 12, caractérisé en ce que les moyens de commande d'inversion (51;151) comprennent un générateur (RAM;RAM') générant une suite d'informations binaires, choisie, possédant une allure sensiblement aléatoire.

14. Dispositif selon la revendication 13, caractérisé en ce que ledit générateur comprend une mémoire reprogrammable (M) dans laquelle est préprogrammée une suite rangée de mots binaires (MT).

15. Dispositif selon l'une des revendications 13 et 14, caractérisé en ce que chaque décision d'inversion est prise en fonction d'une condition logique prédéterminée appliquée à l'un des mots binaires (MT).

16. Dispositif selon l'une des revendications 12 à 15, caractérisé en ce que les moyens de traitement (5) comprennent, en outre, des moyens (52) pour produire un signal perturbateur (SP) tiré au moins d'une forme d'onde, choisie, quasi-aléatoire, et un étage d'incrustation/désincrustation (53;153) pour ajouter algébriquement ce signal perturbateur (SP) aux parties disjointes du signal utile (SU).

17. Dispositif selon la revendication 16, caractérisé en ce que les moyens (52;152) pour produire le signal perturbateur (SP) comprennent un générateur pseudo-aléatoire (G;G') capable d'engendrer une séquence pseudo-aléatoire, choisie, en réponse au chargement dans ce générateur (G;G') d'un mot pré-établi (MT) et une mémoire reprogrammable (M) pour stocker au moins un tel mot.

18. Dispositif selon la revendication 14 prise en combinaison avec la revendication 17, caractérisé en ce que la mémoire reprogrammable (M) est commune aux moyens de commande d'inversion (51;151) et aux moyens (52;152) pour produire le signal perturbateur (SP).

19. Dispositif selon l'une des revendications 12 à 18, destiné au cryptage, caractérisé en ce qu'il comprend en outre un étage de compression (54) du signal utile (SU).

20. Dispositif selon l'une des revendications 12 à 19, destiné au cryptage, caractérisé en ce que la décision de cryptage d'une partie de signal utile (SU) est prise en fonction d'un signal d'autorisation (SA) agissant sur une commande (55) de la chaîne de cryptage.

21. Dispositif selon l'une des revendications 12 à 18, destiné au décryptage, caractérisé en ce qu'il comprend un étage d'expansion (154) du signal vidéo.

22. Dispositif selon l'une des revendications 12 à 21, caractérisé en ce qu'il est logé dans un boîtier (60) muni de connecteurs (61) propres à l'insertion dans une ligne de transmission vidéo (62), en particulier coaxiale, et équipé d'un logement (63) de mémoire enfichable (M) contenant lesdits mots (MT).

23. Dispositif selon l'une des revendications précédentes, caractérisé en ce que lesdites parties disjointes sont relatives à des lignes successives.

FIG.1

EP 0 309 347 A1

FIG.2

FIG.3

EP 0 309 347 A1

FIG.4

FIG.5

EP 0 309 347 A1

Signal vidéo original

Signal vidéo comprimé

Signal vidéo inversé

Signal perturbateur

Signal crypté

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 128 770  (GENERAL INSTRUMENT CORP.)<br>* Page 12, ligne 15 - page 14, ligne 23; page 18, ligne 14 - page 19, ligne 19 *<br>--- | 1-6,12-15,23 | H 04 N   7/167 |
| X | US-A-2 956 110  (SHANAHAN)<br>* Colonne 2, ligne 23 - colonne 5, ligne 30 * | 7,16 | |
| Y | --- | 8,10,17 | |
| Y | US-A-4 636 852  (FARMER)<br>* Colonne 3, ligne 60 - colonne 4, ligne 56; colonne 6, ligne 59 - colonne 7, ligne 15 *<br>--- | 8,10,17 | |
| A | EP-A-0 021 938  (TELEDIFFUSION DE FRANCE)<br>* Page 8, ligne 17 - page 10, ligne 5; page 15, lignes 1-33 *<br>--- | 22 | |
| A | J.E.E. JOURNAL OF ELECTRONIC ENGINEERING, vol. 20, no. 202, octobre 1983, pages 77-79, Tokyo, JP; H. OHYAMA: "Laying the groundwork for two-way cable TV"<br>* Page 79, colonne de gauche, alinéa 3 *<br>--- | 22 | **DOMAINES TECHNIQUES RECHERCHES (Int. Cl.4)**<br><br>H 04 N   7/00 |
| A | EP-A-0 131 663  (SONY)<br>----- | | |

Le présent rapport a été établi pour toutes les revendications

| Lieu de la recherche | Date d'achèvement de la recherche | Examinateur |
|---|---|---|
| LA HAYE | 08-12-1988 | DE ROECK A.F.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant